# EUROPEAN PATENT APPLICATION

(11) **EP 2 524 981 A1**
(43) Date of publication of application: **21.11.2012**
(21) Application number: 11166564.2
(22) Date of filing: 18.05.2011
(51) Int. Cl.: D01F 6/62, D01D 5/16, D01D 5/088, D02G 3/48, B60C 9/00

(54) **Dimensionally stable polyester yarn and preparation thereof**

(71) Applicant: Api Institute, 7821 AT Emmen (NL)
(72) Inventor: Krins, Bastiaan, 7827 RE, Emmen (NL); Veurink, Jannes, 9536 PE, Ees (NL); Oerlemans, Petrus Joannes Maris, 6852 JP, Huissen (NL)
(74) Representative: De Vries & Metman

(57) **Abstract**

A continuous spin-draw-winding process to prepare a drawn polyester yarn suitable for use in high-speed tires and run-flat tires having high energy to break in combination with a good dimensional stability, comprising extruding molten polyester through spinning holes in a spinneret to form a bundle of molten spun filaments, solidifying the spun filaments by a gaseous cooling medium, fixing the spinning speed of the solidified filaments at a first godet in the range of 4050 to 5000 m/min, drawing the solidified filaments to a winding speed in the range of 6800 to 8000 m/min to form drawn filaments. The drawn polyester yarn has a high amorphous orientation distribution, a high crystallinity and a coarse structure. Dipped cords comprising such polyester drawn yarns exhibit excellent dimensional stability at higher temperatures.

## Description

### Technical Field

The invention pertains to drawn polyester multifilament yarns for technical applications, particularly for reinforcement of pneumatic tires, having a high energy to break in combination with a good dimensional stability and to dipped cords comprising such yarns. The polyester multifilament yarns and dipped cords according to the invention are especially useful for high-speed tires and run-flat tires. Therefore, the invention pertains also to tires comprising such yarns and dipped cords. Furthermore, the invention pertains to a process to manufacture such polyester multifilament yarns.

### Background Art

Polyester yarns for technical applications such as applied in dipped cords for pneumatic tires are well known. They have been used for many years as reinforcement in tires. However, up till now the performance of these polyester technical yarns was not good enough for use in the carcass of pneumatic tires with high operating temperatures such as high-speed tires and run-flat tires. For these high demanding tire applications rayon technical yarns are still being used instead of polyester yarns. Therefore, there is an ongoing effort among manufacturers of polyester technical yarns to improve the performance, particularly the energy to break and the dimensional stability, of polyester yarns for tire applications and dipped cords comprising these polyester yarns.

The total amount of energy, which can be absorbed by a yarn, is known as energy to break of that yarn. A higher energy to break of a yarn enables the yarn to function under more severe conditions without breakage.

A high energy to break in drawn yarns yields also a high energy to break in dipped cords and in simulation cured dipped cords.

The dimensional stability of technical yarns for tire applications has in many cases been defined as the sum of a modulus value and a shrinkage value. Polyester technical yarns should exhibit a high modulus (HM) and a low shrinkage (LS) at the operating temperature of the tires. Therefore, such polyester yarns are also known as HMLS yarns. However, dimensional stability values of the prior art are difficult to compare with each other as almost every manufacturer of polyester yarns measures shrinkage and modulus under different conditions. For example the modulus values of the prior art have been determined as elongation at specified load (also called tension), EASL or EAST, wherein different loads (tensions) of 4.5 g/d, 4.0 cN/dtex and 41 cN/tex have been recorded. Shrinkage values have been recorded for temperatures ranging from 150°C to 185°C and residence times ranging of 1 minute up to 30 minutes.

Tire cords experience deformations of a few percent during service in a tire and therefore the TASE 5%, i.e. the tensile force at a specified elongation of 5%, is a better measure of the performance modulus of the tire cord in actual use. To obtain a reliable prediction of the performance of technical yarns used in dipped cords in pneumatic tires it is preferred to determine the TASE 5% for a simulation cured, dipped cord (TASE 5% s.c.d.c.) at the operating temperature of the tire. This dipped cord property is also evaluated by tire manufacturers.

High modulus, low shrinkage polyester yarns have been manufactured either in continuous spin-draw-winding processes, wherein the yarns are spun, solidified and drawn in an integrated process, or in two-step processes, wherein undrawn solidified yarns are wound on bobbins and wherein these undrawn yarns are subsequently drawn on a separate drawing frame. Manufacturing of HMLS polyester yarns in two-step processes has the advantage that the spinning conditions can be independently chosen from the drawing conditions to optimise the properties of final drawn yarn, but two-step processes are inherently less cost effective compared to continuous processes due to higher operating costs. In contrast, continuous spin-draw-winding processes have an economical advantage, but it has proven to be much more difficult to manufacture drawn polyester yarns with the required properties in order for these yarns to be used in high demanding tire applications. Especially achieving spinning speeds in excess of 3700 m/min in continuous spin-draw-winding processes has been thought to be impossible as frequent filament breakage had been observed when increasing the spinning speed.

WO 2008/156333 A1 discloses a two-step process to manufacture polyester tire yarn to replace PA66 yarns in cap-ply applications. In cap-ply applications a high shrinkage force is desired in the yarn and in the cord to restrain movement of the steel belt in a tire. The disclosed undrawn polyester yarns have a crystallinity of at least 25%, preferably 25 to 40% and an amorphous orientation factor (AOF) of 0.15 or less, preferably 0.08 to 0.15, in order to obtain a high shrinkage force in the drawn yarn and in the cord comprising these yarns.

US 2005/0074607 A1 discloses that drawing of the undrawn yarn in a two-step process becomes increasingly difficult for yarns that have been spun at high spin-line stress, i.e. at high spinning speeds. Drawing of such undrawn yarns in continuous spin-draw-winding processes is known to be even more problematic.

WO 96/20299 A1 discloses a continuous spin-draw-winding process for manufacturing polyester yarns with increased output of the spinning equipment wherein the undrawn yarn has a crystallinity lower than 16%, preferably 7.5 to 12%, and wherein the undrawn yarn is drawn at a draw ratio of 1.5 to 3.5. It had been found that manufacturing polyester yarns at winding speeds above 6000 m/min in a continuous spin-draw-winding process resulted in an unstable spinning process with a great deal of broken filaments in the drawn yarn or in a process which did not result in a yarn with advantageous use properties unless the undrawn yarn had a crystallinity lower than 16%.

WO 2004/005594 A1 discloses a continuous spin-draw-winding process for manufacturing polyester yarns having improved cooling, comprising cooling of the extruded filaments by a transverse flow of cooling medium followed by cooling by self-suction. The polyester yarns have a dimensional stability, defined as the sum of elongation at specified tension of 410 mN/tex and hot air shrinkage at 180°C, in the range of 10.0% to 10.3%.

WO 2009/012916 A2 discloses a continuous spin-draw-winding process for manufacturing polyester yarns wherein the cooling of the extruded filaments has been improved further over the cooling of WO 2004/005594 to prevent hot filaments sticking to one another. The polyester yarns have a dimensional stability, defined as the sum of elongation at specified tension of 410 mN/tex and hot air shrinkage at 180°C in the range of 10.3% to 11.1 %.

### Summary of invention

An aspect of the present invention is to provide a drawn polyester yarn, which has a high energy to break in combination with a superior dimensional stability, by a method for producing drawn polyester, preferably polyethylene terephthalate (PET), yarn in a continuous spin-draw-winding process comprising extruding molten polyester through spinning holes in a spinneret to form a bundle of molten spun filaments, solidifying the spun filaments by a gaseous cooling medium, fixing the spinning speed of the solidified filaments at a first godet, drawing the solidified filaments to form drawn filaments and winding the drawn filaments as drawn polyester yarn wherein the spinning speed at the first godet is in the range of 4050 to 5500 m/min and the winding speed after drawing is in the range of 6800 to 8000 m/min, preferably 6800 to 7500 m/min, most preferably 6800 to 7200 m/min.

The inventors surprisingly found an operating window at very high spinning speeds where stable yarn production could be achieved despite general experiences that spinning speeds above 3700 m/min in a continuous spin-draw-winding process had been considered impossible.

It has now been found that the optimum for the spinning speed at the first godet depends on the type of polyester used in the continuous spin-draw-winding process. DMT-based polyester should preferably be spun at 4050 to 5000 m/min, more preferably 4050 to 4500 m/min, even more preferably 4050 to 4300 m/min, most preferably 4100 to 4300 m/min. PTA-based polyester should preferably be spun at 4500 to 5500 m/min, more preferably 4500 to 5100 m/min, most preferably 4600 to 5100 m/min.

Fixing the spinning speed at the first godet at such a very high level, especially when combined with a rapid cooling of the extruded filaments, is believed to introduce high spinning stress on the filaments between the spinning hole and the first godet, which results in orientation induced crystallization in the filaments and high crystallinity in the spun, undrawn filaments. The undrawn filaments at the first godet, spun at such very high spinning speeds, furthermore exhibit amorphous orientation distribution factor (Fad) of at least 2.60.

DMT-based undrawn polyester filaments according to the invention have a Fad in the range of 2.60 to 4.00, preferably in the range of 2.80 to 3.60. PTA-based undrawn polyester filaments have a Fad in the range of 2.60 to 4.00, preferably in the range of 2.60 to 3.10.

The undrawn polyester filaments at the first godet, having high crystallinity and high Fad, after drawing yield drawn polyester filaments with high Fad and a high coarseness of the drawn filaments. These drawn polyester filaments and yarns exhibit high energy to break and improved dimensional stability (either the sum of EAST and HAS, or the TASE 5% s.c.d.c) in pneumatic tires. After drawing of the solidified filaments, the drawn filaments according to the present invention have an amorphous orientation distribution factor (Fad) of at least 1.40.

Dipped cords comprising drawn polyester yarns with a Fad of at least 1.40 exhibit an excellent dimensional stability (TASE 5% s.c.d.c.) at higher temperatures, which enables the use of such dipped polyester cords in pneumatic tires at higher operating temperatures as for example encountered in high-speed tires and run-flat tires.

### Description of embodiments

Surprisingly, the inventors have found that drawn polyester multifilament yarn, having high energy to break and superior in dimensional stability, especially at high temperatures, as required for example in high-speed or run-flat tires, can be produced in a continuous spin-draw-winding process comprising extruding molten polyester through spinning holes in a spinneret to form a bundle of molten spun filaments, solidifying the spun filaments by a gaseous cooling medium, fixing the spinning speed of the solidified filaments at a first godet, drawing the solidified filaments to form drawn filaments and winding the drawn filaments as yarn, wherein the spinning speed at the first godet is in the range of 4050 to 5500 m/min and the winding speed after drawing is in the range of 6800 to 8000 m/min, preferably 6800 to 7500 m/min, most preferably 6800 to 7200 m/min.

The inventors surprisingly found an operating window at very high spinning speeds where stable yarn production could be achieved despite general experiences that spinning above 3700 m/min in a continuous spin-draw-winding process had been considered impossible. Furthermore, it has been found that DMT-based polyester and PTA-based polyester have different operating windows. The spinning speed at the first godet in the inventive continuous spin-draw-winding process to produce drawn polyester multifilament yarn, is preferably in the range of 4050 to 5000 m/min, more preferably 4050 to 4500 m/min, even more preferably 4050 to 4300 m/min, most preferably 4100 to 4300 m/min in case the polyester is based on DMT. In case the polyester is based on PTA, the spinning speed at the first godet is preferably in the range of 4500 to 5500 m/min, more preferably 4500 to 5100 m/min, most preferably 4600 to 5100 m/min. The winding speed after drawing is preferably less than 7500 m/min, more preferably less than 7200 m/min, most preferably less than 7000 m/min in case the polyester is based on DMT. In case the polyester is based on PTA, the winding speed after drawing is preferably less than 8000 m/min, more preferably less 7800 than m/min, most preferably less than 7500 m/min.

In a preferred embodiment the spun filaments pass through a heated sleeve directly after being extruded from the spinning holes in the spinneret and before being solidified by a gaseous cooling medium. Such a heated sleeve would have a length in the range of 0.1 to 1.0 m, preferably a length in the range of 0.1 to 0.2 m.

In a further preferred embodiment the spun filaments are solidified by cooling by a gaseous cooling medium in two steps, wherein in the first cooling step the gaseous cooling medium flows transversely through the bundle of filaments and leaves the bundle of filaments substantially completely on the opposite side of the inflow and wherein in the second cooling step the filament bundle is cooled further through self-suction by a gaseous cooling medium surrounding the filament bundle. In the cooling step the spun filaments are rapidly cooled to solidify the filaments as quickly as possible and with a high orientation and consecutive crystallization of the polymer chains due to the high spinning stress between the spinning hole and the first godet.

In another preferred embodiment the gaseous cooling medium in the first cooling step is blown from a blowing device on the inflow side and sucked substantially completely out of the filament bundle by a sucking device on the opposite side of the inflow side.

In an even more preferred embodiment of the invention the gaseous cooling medium in the first cooling step is blown transversely towards the filament bundle from a blowing device over a length L1 along the filament bundle, starting directly under the spinneret or directly under the heated sleeve when a heated sleeve is used, and the gaseous cooling medium leaves the bundle of filaments substantially completely by suction over a length L2 along the filament bundle, also starting directly under the spinneret or directly under the heated sleeve when a heated sleeve is used, where the ratio of the suction length L2 over the blowing length L1 is in the range of 0.13 to 0.33, preferably in the range of 0.17 to 0.29, more preferably in the range of 0.20 to 0.26, and most preferably in the range of 0.21 to 0.25.

In a preferred embodiment of the invention the absolute value of the suction length L2 is in the range of 5 to 50 cm, preferably 10 to 25 cm, most preferably 12 to 21 cm and the absolute value of the blowing length is in the range of 20 to 150 cm, preferably 35 to 75 cm, most preferably 49 to 58 cm.

The flow of gaseous cooling medium blown transversely towards the filament bundle in the first cooling step may not only be blown from a single blowing device, but also from a second, third, etc. blowing device, with these transverse blowing devices being located immediately below one another on the inflow side and in total having a length of L1. Each of these transverse blowing devices can fundamentally be operated with a blowing volume of gaseous cooling medium that can be set independently of the blowing volumes of gaseous cooling medium with which each of the other transverse blowing devices is operated. Furthermore, each of these transverse blowing devices can fundamentally be operated with a temperature of the gaseous cooling medium that can be set independently of the temperatures of the gaseous cooling media with which each of the other transverse blowing devices is operated.

In a preferred embodiment of the inventive method, the first cooling zone has a first transverse blowing device and an immediately adjoining second transverse blowing device on the inflow side, with the first and second transverse blowing devices together having a total length L1, and with the first transverse blowing device being operated with a flow velocity v₁₁ of the gaseous cooling medium and the second transverse blowing device being operated with a flow velocity v₁₂ of the gaseous cooling medium, with v₁₁ being different from v₁₂.

In a further preferred embodiment of the inventive method, the first cooling zone has a first transverse blowing device and an immediately adjoining second transverse blowing device on the inflow side, with the first and second transverse blowing devices together having a total length L1, and with the first transverse blowing device being operated with a temperature T₁₁ of the gaseous cooling medium and the second transverse blowing device being operated with a temperature T₁₂ of the gaseous cooling medium, with T₁₁ being different from T₁₂.

The two above-mentioned embodiments allow the cooling conditions in the first cooling zone to be adapted particularly accurately to changing cooling requirements.

The inventive method can also be performed in that the filament bundle in the second cooling zone is further cooled by self-suction of gaseous cooling medium in the vicinity of the filament bundle, with the temperature of the gaseous cooling medium being controlled before entering the second cooling zone.

An especially preferred embodiment of the process according to the invention comprises a spinning speed at the first godet in the operation window as described above in combination with the rapid cooling of the extruded filaments by a gaseous cooling in two cooling steps as described above, to obtain the desired Fad in the drawn polyester yarn and the desired dimensional stability (either the sum of EAST and HAS, or the TASE 5% s.c.d.c) in the drawn yarn and dipped cord comprising the drawn polyester yarn having a high Fad.

Fixing the spinning speed at the first godet at such a very high level, especially when combined with a rapid cooling of the extruded filaments, is believed to introduce high spinning stress on the filaments between the spinning hole and the first godet, which results in orientation induced crystallization in the filaments and high crystallinity in the spun, undrawn filaments. The undrawn filaments at the first godet, spun at such very high spinning speeds, furthermore exhibit amorphous orientation distribution factor (Fad) of at least 2.60. DMT-based undrawn polyester filaments according to the invention have a Fad in the range of 2.60 to 4.00, preferably in the range of 2.80 to 3.60. PTA-based undrawn polyester filaments have a Fad in the range of 2.60 to 4.00, preferably in the range of 2.60 to 3.10.

The spun, undrawn polyester filaments having a high crystallinity and a high amorphous orientation distribution factor are drawn at a relatively low draw ratio to yield drawn polyester filaments having a high amorphous orientation distribution in the drawn polyester yarns, while remaining a coarse structure. The crystal formation in the polyester filaments in the process according to the invention mainly occurs between the spinning hole and the first godet.

In the present invention, the undrawn polyester yarns of are drawn at a draw ratio less than 2. DMT-based undrawn polyester filaments are preferably drawn at a draw ratio in the range of 1.35 to 2.00, more preferably in the range of 1.40 to 1.75, even more preferably in the range of 1.56 to 1.75, most preferably 1.63 to 1.75. PTA-based undrawn polyester filaments are preferably drawn at a draw ratio in the range of 1.24 to 1.78, more preferably in the range of 1.27 to 1.56, even more preferably in the range of 1.40 to 1.56, most preferably 1.43 to 1.52.

After drawing of the solidified filaments, the drawn polyester filaments according to the invention have an amorphous orientation distribution factor (Fad) of at least 1.40.

In case the drawn filaments are based on DMT polyester, the Fad is at least 1.40, preferably at least 1.45 and most preferably at least 1.50. In case the drawn filaments are based on PTA polyester, the Fad is at least 1.40, preferably at least 1.50, more preferably at least 1.55.

The drawn polyester filaments according to the invention, further exhibit a coarse structure formed by large crystals and large amorphous domains. The mean crystal size (Sc) in the drawn polyester filaments is at least 3.0*10⁵ Å³, preferably at least 3.5*10⁵ Å³, more preferably at least 4.0*10⁵ Å³. The mean size of the amorphous domains (Sa) in the drawn polyester filaments is at least 5.0*10⁵ Å³, preferably at least 6.0*10⁵ Å³, more preferably at least 7.5*10⁵ Å³.

A high amorphous orientation distribution factor in the drawn filaments means that there is a wide distribution in the orientation of polymer chains in the amorphous phase(s) of the drawn filaments. Although a high orientation of polymer chains in the amorphous phase(s) will contribute to a higher modulus of the drawn filaments, the same high orientation of polymer chains in the amorphous phase(s) also contributes significantly to an undesired high shrinkage and shrinkage force.

In drawn polyester filaments having a high amorphous orientation distribution factor, some of the polymer chains in the amorphous phase(s) are highly oriented and will thus contribute to the modulus of the filaments. Other polymer chains will however be in an almost random state. Without being bound to theory, it is believed that a backbone of highly oriented crystals, resulting from the high stress induced crystallization during spinning, having a high melting point resist the shrinkage tendency of the polymer chains in the amorphous phase(s) in the drawn filaments to obtain drawn polyester yarns with very low shrinkage values. The coarse structure in the drawn filaments forming a backbone of highly oriented crystals increases the modulus of drawn polyester yarns.

Drawn polyester yarns according to the present invention have an energy to break of at least 70 J/g. Preferably, the drawn polyester yarn has an energy to break in the range of 70 to 100 J/g, more preferably in the range of 70 to 90 J/g, most preferably in the range of 80 to 90 J/g.

The energy to break is determined in accordance with ASTM D885, wherein the energy to break is calculated as the integral under the stress-strain curve.

Drawn polyester yarns according to the present invention have a dimensional stability, defined as the sum of elongation at specified tension (EAST) and hot air shrinkage (HAS), in the range of 7.75 to 9.25 %, preferably in the range of 7.75 to 8.75 %, more preferably in the range of 8.00 to 8.75 %.

The EAST is determined in accordance with ASTM D885 at a specified tension of 410 mN/tex. The HAS is also determined in accordance with ASTM D885 at a temperature of 180°C, a tension of 5 mN/tex and a residence time of 2 minutes.

The process of WO 2004/005594 yields drawn polyester yarns having an energy to break of up to 65 J/g and a dimensional stability (EAST+HAS) of 10.0 % or higher. The drawn polyester yarns according to the present invention have higher energy to break as compared to WO 2004/005594, and improved dimensional stability in the range of 8.0 to 9.0 %, which is a relative improvement of 10 to 20%.

The process of WO 2009/012916 yields drawn polyester yarns having an energy to break of up to 78 J/g in combination with a dimensional stability (EAST+HAS) of 10.3 % or higher. The combination of a high energy to break in combination with superior dimensional stability has not been achieved with the process of WO 2009/012916.

Dipped cords according to the present invention have an energy to break of at least 60 J/g. Preferably, the dipped cords have an energy to break in the range of 60 to 100 J/g, more preferably in the range of 60 to 90 J/g, most preferably in the range of 65 to 80 J/g.

Simulation cured dipped cords according to the present invention have an energy to break of at least 60 J/g. Preferably, the simulation cured dipped cords have an energy to break in the range of 60 to 100 J/g, more preferably in the range of 60 to 90 J/g, most preferably in the range of 65 to 80 J/g.

Dipped cords comprising drawn polyester yarns with a Fad of at least 1.40 exhibit an excellent dimensional stability, especially at higher temperatures, which enables the use of cords according to the present invention in pneumatic tires operating at higher temperatures as for example encountered in high-speed tires and run-flat tires. Dipped cords according to the present invention have a TASE 5% s.c.d.c. at 20°C of at least 140 mN/tex, preferably at least 145 mN/tex, more preferably at least 150 mN/tex.

The TASE 5% s.c.d.c. at an operating temperature of 120°C is of importance for dipped cords for use in regular pneumatic tires. Dipped cords according to the invention will exhibit improved performance when the TASE 5% s.c.d.c. is increased. Dipped cords according to the invention have a TASE 5% s.c.d.c. at 120°C of at least 70 mN/tex, preferably at least 80 mN/tex.

The TASE 5% s.c.d.c. at a high operating temperature of 150°C is of particular importance for dipped cords for use in high demanding tire application such as high-speed tires and run-flat tires. Dipped cords according to the invention will exhibit sufficient performance at this high operating temperature as the cords have a TASE 5% s.c.d.c. at 150°C of at least 60 mN/tex, preferably at least 70 mN/tex.

The polyester polymer of the invention is to be understood to be a polymer containing at least 90 mol% of repeating ethylene terephthalate units. The polyester may be based either on dimethylterephthalate (DMT) or on purified terephthalic acid (PTA).

Tire cords experience deformations of a few percent during service in a tire and therefore the TASE 5%, i.e. the tensile force at specified elongation of 5%, is a good measure of the modulus of the tire cord in actual use. To obtain a reliable prediction of the performance of technical yarns used in dipped cords in pneumatic tires it is preferred to determine the TASE 5% for a simulation cured, dipped cord (TASE 5% s.c.d.c.) at the operating temperature of the tire.

To test the unique combination of properties, the yarn is twisted, corded, and dipped using a procedure which is highly suitable for comparable purposes and, moreover, fits well with the treatments such a yarn would be subjected to if it were used as reinforcing material in rubber articles. The procedure to determine the TASE 5% for a simulation cured, dipped cord (TASE 5% s.c.d.c.) is carried out as follows.

On a Lezzeni twister two yarns with a linear density of about 1440 dtex is processed into a 1440dtex x Z380 x 2 S380 greige cord construction.

Next, a water-dispersed blocked isocyanate, e.g. a dispersion of 5.5 wt% of blocked diisocyanate, such as caprolactam blocked methylene diphenyl isocyanate, in an aqueous solution of an epoxide, e.g. an aliphatic epoxide, is applied to the resulting greige cord. After this the cord is dried for 120 seconds in a hot-air oven at a temperature of 150 °C under a load of 20 mN/tex.

The first drying step is followed straightaway by a hot drawing step. This hot drawing of the cord is carried out in a hot-air oven for 30 seconds at a temperature of 240 °C and under a load of 70 mN/tex.

After the hot drawing step the cord is passed through a second dipping bath filled with a dispersion of 20 wt% of resorcinol formaldehyde latex in water, after which the cord is dried in a hot-air oven for 30 seconds at a temperature of 220 °C and under a load of 10 mN/tex to obtain a dipped cord.

These greige cord treatment steps can be carried out, e.g., in a single-cord Litzer Computreater dipping unit.

The dipped cord is submitted to a free shrinkage of 15 min. at 180 °C in an oven without applying a load. This step is called the simulation curing, and the obtained cord is called the simulation cured dipped cord.

The TASE 5% of the simulation cured dipped cord (Tase 5% s.c.d.c.) is detemined according to ASTM D885. The TASE 5% s.c.d.c. is determined at temperatures of 20 °C, at 120 °C and at 150 °C.

Birefringence of the yarn is measured with a Carl Zeiss Jena Polarisation microscope equipped with an interference monochromator (DSIF 00234-9, 546 nm). The method of compensation according to "de Senarmont" was followed, by making use of a 1/4λ retardation plate, positioned parallel to the polarizer. Twenty filaments, immersed in dibutylphtalate, were positioned in parallel between microscopic slides and placed at an angle of 45° with the polariser. At the ends, where the filaments were cut on the bias, the overall phase difference ϕ of the retardation of light polarized parallel and perpendicular to the filament axis, was determined from the number of fringes (including a partial fringe found by compensation with the analyser). The birefringence, An = ϕ/2π*λ/D, where D is the diameter of the filament. The sample birefringence (Fab) is the average birefringence of eighteen filaments after neglecting the upper and the lower value.

The Sonic Modulus of a yarn (Fas) is determined according to the following procedure. A yarn sample is clamped at one end, passed horizontally over a couple of pulleys, and loaded at the other end with 2 cN/tex. Between the pulleys, two piezo-electric transducers are placed on the yarn for transmitting and receiving sonic pulses of 60 µs with a frequency of 10 kHz. An oscilloscope was used to adjust the triggering of the pulses via a counter. After two minutes, the pulse propagation time through the yarn was measured in threefold, with a measuring time of 60 s over a distance of 120 cm and, subsequently over a distance of 40 cm. The difference of distance, being 80 cm, divided by the average travelling time equals the sound velocity in the yarn. The product of the density of the yarn, as measured in a Davenport density column, and the square of the sound velocity equals the sonic modulus of the yarn.

From the birefringence and the sonic modulus the Fad, i.e. the amorphous orientation distribution factor, of the yarn can be calculated. The Fad is the contour length distribution factor, Fas/Fab, as has been described in the "Handbook of Applied Polymer Processing Technologies"; Nicholas P. Cheremisinoff, Paul N. Cheremisinoff (ed.); Marcel Dekker Inc., 1996; ISBN 0-8247-9679-9.

The Fas represents the most oriented polymer chains in the amorphous phases, while the Fab represents the average amorphous orientation in the amorphous phases.

Example 1

DMT-based Polyethyleneterephthalate chips with a relative viscosity of 2.04 (measured in a solution of 1 gram of polymer in 125 grams of a mixture from 2,4,6,-trichlorophenol and phenol (TCF:F ratio of 7:10 on a weight/weight basis) at 25 °C in an Ubbelohde Viskosimeter (DIN 51562)) has been spun at a temperature of 305 °C. A yarn with a count of 1440 dtex has been spun using a spinning plate with 331 holes having a diameter of 800 µm. Below the spinneret a heated sleeve of 150 mm with a temperature of 200 °C has been used. The spun filaments are subsequently solidified by a gaseous cooling medium in two cooling steps, wherein in the first cooling step the gaseous cooling medium flows transversely through the bundle of filaments and leaves the bundle of filaments substantially completely on the opposite side of the inflow and wherein in the second cooling step the filament bundle is cooled further through self-suction of a gaseous cooling medium surrounding the filament bundle. The heated sleeve and the cooling have been described in patent application WO 2009/012916. The spinning speed at the first godet was set to 4107 m/min. The speed after drawing was set to 7000 m/min, and the winding speed was set to 6755 m/min.

The properties of the undrawn polyester yarn, drawn polyester yarn and simulation cured dipped cord are summarized in Table 1.

Example 2

Spinning of the polyester yarns has been conducted as in Example 1, except that the Polyethyleneterephthalate chips were PTA-based with a relative viscosity of 2.18 and that the spinning speed at the first godet was set to 4667 m/min in example 2A and to 4827 m/min in example 2B.

The properties of the undrawn polyester yarns, drawn polyester yarns and simulation cured dipped cords are summarized in Table 1.

**Table 1**

| | | Example 1 | Example 2A | Example 2B |
|---|---|---|---|---|
| Undrawn yarn | | | | |
| | Fad at first godet (-) | 3.27 | 2.88 | 2.93 |
| | | | | |

| Drawn yarn | | | | |
|---|---|---|---|---|
| | Energy to Break (J/g) | 74.4 | 81.7 | 84.6 |
| | Fad (-) | 1.56 | 1.58 | 1.63 |
| | EAST (%) | 5.50 | 5.58 | 5.84 |
| | HAS (%) | 2.76 | 2.84 | 2.81 |
| | EAST + HAS (%) | 8.26 | 8.42 | 8.65 |
| | Crystal size (Å³) | 4.00*10⁵ | 4.40*10⁵ | 4.78*10⁵ |
| | Size of the amorphous domains (Å³) | 7.98*10⁵ | 8.78*10⁵ | 9.58*10⁵ |
| | Breaking strength (mN/tex) | 558 | 578 | 551 |
| | Elongation at break (%) | 16.8 | 17.9 | 19.3 |
| | | | | |

| Dipped Cord | | | | |
|---|---|---|---|---|
| | Energy to Break (J/g) | | 70 | 75 |
| | | | | |

| Simulation cured dipped cord | | | | |
|---|---|---|---|---|
| | Energy to Break (J/g) | 69 | 73 | 75 |
| | TASE 5% s.c.d.c. at 20°C (mN/tex) | 151 | 156 | 160 |
| | TASE 5% s.c.d.c. at 120°C (mN/tex) | 89 | | |
| | TASE 5% s.c.d.c. at 150°C (mN/tex) | 75 | | |

## Claims

1. A drawn polyester yarn comprising polyester filaments **characterised in that** the drawn polyester yarn has an energy to break of at least 70 J/g and a dimensional stability, defined as the sum of EAST and HAS, in the range of 7.75 to 9.25 %.

2. A drawn polyester yarn according to claim 1 **characterised in that** the drawn polyester yarn has a dimensional stability in the range of 7.75 to 8.75 %.

3. A drawn polyester yarn comprising polyester filaments **characterised in that** the drawn polyester yarn has an energy to break of at least 70 J/g and an amorphous orientation distribution factor of at least 1.40.

4. A drawn polyester yarn according to any of claims 1 to 3 **characterised in that** the drawn polyester yarn has an energy to break in the range of 70 to 100 J/g, preferably 70 to 90 J/g, most preferably 80 to 90 J/g.

5. A polyester dipped cord **characterised in that** the polyester dipped cord has an energy to break of at least 60 J/g and that the polyester dipped cord has a TASE 5% s.c.d.c. of at least 140 mN/tex at 20°C.

6. A polyester simulation cured dipped cord **characterised in that** the polyester simulation cured dipped cord has an energy to break of at least 60 J/g and a TASE 5% s.c.d.c. of at least 140 mN/tex at 20°C.

7. A polyester simulation cured dipped cord according to claim 6 **characterised in that** the polyester simulation cured dipped cord has an energy to break in the range of 60 to 100 J/g, preferably 60 to 90 J/g, most preferably 65 to 80 J/g.

8. A polyester simulation cured dipped cord according to any of claims 6 to 7 **characterised in that** the simulation cured dipped cord has a TASE 5% s.c.d.c. of at least 70 mN/tex at 120°C.

9. A polyester simulation cured dipped cord according to any of claims 6 to 8 **characterised in that** the simulation cured dipped cord has a TASE 5% s.c.d.c. of at least 60 mN/tex at 150°C.

10. A polyester dipped cord comprising a drawn polyester yarn according to any of claims 1 to 4.

11. A method for producing drawn polyester yarn in a continuous spin-draw-winding process comprising extruding molten polyester through spinning holes in a spinneret to form a bundle of molten spun filaments, solidifying the spun filaments by a gaseous cooling medium, fixing the spinning speed of the solidified filaments at a first godet, drawing the solidified filaments to form drawn filaments and winding the drawn filaments as yarn **characterised in that** the spinning speed at the first godet is in the range of 4050 to 5000 m/min for DMT-based polyester or 4500 to 5500 m/min for PTA-based polyester and that the winding speed after drawing is in the range of 6800 to 8000 m/min and that the spun filaments are solidified by a gaseous cooling medium in two cooling steps, wherein in the first cooling step the gaseous cooling medium flows transversely through the bundle of filaments and leaves the bundle of filaments substantially completely on the opposite side of the inflow and wherein in the second cooling step the filament bundle is cooled further through self-suction of a gaseous cooling medium surrounding the filament bundle.

12. A method for preparing a drawn polyester yarn according to claim 11 **characterised in that** in the first cooling step the gaseous cooling medium is blown from at least one blowing device on the inflow side and sucked substantially completely out of the filament bundle by a sucking device on the opposite side of the inflow side.

13. A method for preparing a drawn polyester yarn according to claim 12 **characterised in that** the gaseous cooling medium in the first cooling step is blown transversely towards the filament bundle from at least one blowing device over a blowing length L1 along the filament bundle, and the gaseous cooling medium leaves the bundle of filaments substantially completely by suction over a suction length L2 along the filament bundle, wherein the ratio of the suction length L2 over the blowing length L1 is in the range of 0.13 to 0.33.

14. A pneumatic tire comprising a polyester drawn yarn according to any of claims 1 to 4.

15. A pneumatic tire comprising a polyester dipped cord according to claim 5 or 10.
